# NEUE EUROPÄISCHE PATENTSCHRIFT

(11) **EP 1 712 380 B2**
(45) Veröffentlichungstag und Bekanntmachung des Hinweises auf die Entscheidung über den Einspruch: **25.05.2016**
(45) Hinweis auf die Patenterteilung: 06.01.2010
(21) Anmeldenummer: 06007972.0
(22) Anmeldetag: 18.04.2006
(51) Int. Cl.: B60G 17/052

(54) **Schaltventil für Anlagen zum Heben und Senken eines Fahrzeugaufbaus**
Switching valve for raising and lowering a vehicle body
Vanne de commutation pour soulever et baisser une carrosserie de véhicule

(30) Priorität: 16.04.2005 DE 102005017590; 13.04.2006 DE 102006017890
(43) Veröffentlichungstag der Anmeldung: 18.10.2006
(60) Teilanmeldung: 09155521.9
(73) Patentinhaber: Haldex Brake Products GmbH, 69123 Heidelberg (DE)
(72) Erfinder: Tschöke, Tobias, 76646 Bruchsal (DE); Becke, Stefan, 68804 Altlußheim (DE); Sulzyc, Georg, 69168 Wiesloch (DE)
(74) Vertreter: REHBERG HÜPPE + PARTNER

(56) Entgegenhaltungen:
- EP-A- 0 188 706
- EP-A- 0 536 124
- WO-A-91/07291
- WO-A-92/12021
- DE-A1- 2 623 235
- DE-C1- 4 120 824
- DE-C1- 10 129 143

## Beschreibung

### TECHNISCHES GEBIET DER ERFINDUNG

Die Erfindung betrifft ein manuell betätigbares pneumatisches Schaltventil für Anlagen zum Heben und Senken eines Fahrzeugaufbaus gemäß dem Oberbegriff des Anspruchs 1.

### STAND DER TECHNIK

Manuell betätigbare pneumatische Schaltventile der hier angesprochenen Art werden eingesetzt für Anlagen zum Heben und Senken eines Fahrzeugaufbaus von luftgefederten Fahrzeugen. Ein derartiges Schaltventil besitzt ein mechanisches Bedienelement, über das ein Steuerelement, wie beispielsweise ein Steuerkolben, in unterschiedliche Stellungen HEBEN, SENKEN, FAHRT und STOP, verbracht werden kann. Über den Steuerkolben werden in den unterschiedlichen genannten Stellungen für zumindest einen Luftfederkreislauf je ein Einlassventil, ein Auslassventil und ggf. ein Sperrventil, beispielsweise in Stößelbauart, betätigt. Hierbei kann ein Sperrventil an eine von einem Niveauregelventil herangeführte Leitung angeschlossen sein.

Nach dem Loslassen des Bedienelements und für ein Indizieren einer Betriebsbedingung FAHRT kann ein Rückführen von Bedienelement und Steuerelement über eine Federanordnung, insbesondere eine Torsionsfeder, oderüberexzentrisch über das Steuerelementeinwirkende federbelastete Stößel von Einlassventil oder Auslassventil in die Stellung STOP bewirken. Weiterhin kann durch eine Druckbeaufschlagung einer Steuerfläche des Steuerelements eine automatisierte Überführung des Steuerelements von der Stellung STOP in die Stellung FAHRT erfolgen.

Bei dem Bedienelement handelt es sich üblicherweise um einen Drehgriff oder Drehknopf, der in einer Axialstellung STOP zwischen Schwenkstellungen HEBEN, SENKEN und NEUTRAL verschwenkbarist, sowie über eine Axialbewegung von der Stellung STOP in die Stellung FAHRT überführbar ist. Ein pneumatisches automatisches Überführen von der Stellung STOP in die Stellung FAHRT ist bei Indikation einer Fahrsituation erforderlich, um ein willkürliches Heben und/oder Senken des Fahrzeugaufbaus während einer Fahrt zu unterbinden. Gleichzeitig soll während einer Fahrsituation über das Schaltventil eine Einwirkung eines Niveauregelventils auf die Luftfederelemente möglich sein.

Ein pneumatisches Schaltventil der eingangs beschriebenen Art ist beispielsweise aus DE 41 20 824 C1 bekannt. Das Schaltventil weist einen Steuerkolben auf, der eine Nockenfläche besitzt, mit welcher der Stößel eines Sperrventils durch Axialverschiebung des Steuerkolbens betätigt werden kann. Insoweit ist ein Schalten aus der Stellung STOP in die Stellung FAHRT und umgekehrt möglich. Mit dem Steuerkolben sind Nokkenscheiben axial verschiebbar, jedoch drehfest gekuppelt, wobei die Nockenscheibe Nockenflächen zur Betätigung eines Einlassventils und eines Auslassventils aufweisen. Für jeden Luftfederkreis ist jeweils eine Satz von drei derartigen Ventilen, nämlich ein Einlassventil, ein Auslassventil und ein Sperrventil, vorgesehen. Dem Steuerkolben ist eine Hülse als weiteres Bauteil zugeordnet, die einerseits mit dem Steuerkolben und andererseits mit dem Bedienelement drehfest verbunden ist. Weiterhin ist eine Federanordnung vorgesehen, die auf die Hülse und über die Hülse auf den Steuerkolben einwirkt, um eine automatische Rückführung aus der Stellung HEBEN oder SENKEN in die Stellung STOP zu bewirken, sobald das Bedienungselement losgelassen wird, wie dies üblicherweise nach einem Hebe- oder Senkvorgang der Fall ist. Die Betätigungsachsen der drei Ventile eines Satzes für einen Luftfederkreissind in einer gemeinsamen Ebene angeordnet, die die Längsachse des Schaltventils bzw. des Schaltkolbens schneidet. Auf diese Art und Weise können auch Ventilgruppen fürmehrere Luftfederkreise überden Umfang verteilt angeordnet werden. Es ist auch eine Drehbehinderung für die Verhinderung einer Verdrehung des Schaftkolbens in der Stellung FAHRTvorgesehen. Der Steuerkolben ist durch Druckluft, insbesondere Druckluftimpulse, axial verschiebbar im Gehäuse des Schaltventils gelagert, um sicherzustellen, dass im Fahrbetrieb die Stellung FAHRT eingenommen wird.

Aus der DE-OS 25 10 954 ist ein Schaltventil für die Stellungen HEBEN, SENKEN, FAHRT und STOP bekannt. Bei diesem Schaltventil sind die dem einzelnen Luftfederkreis zugeordneten Ventile nicht in Stößelbauart, sondern in Schieberbauart verwirklicht. Es ist ein gesonderter Steuerkolben vorgesehen, der mit Druckluft beaufschlagt ist, so dass dieses Schaltventil über Druckluft in die Stellung FAHRT verstellt werden kann. Die beiden Ventilschieber sind mit ihren Achsen parallel zueinander angeordnet. Es sind Rückführfedern fürdie Schieber vorgesehen, die eine Rückführung des Schaltventils in die Stellung STOP bewirken, sobald das mechanische Bedienelement losgelassen wird.

Schließlich ist aus DE 101 29 143 C1 bekannt, dass Stößel eines Einlassventils sowie eines Auslassventils koaxial zueinander, aber exzentrisch zur Längsachse eines Steuerkolbens auf einen Nocken des Steuerkolbens einwirken. Bei einer Verschwenkung des Steuerkolbens in eine Stellung HEBEN oder SENKEN wird die dem Einlassventil oder Auslassventil zugeordnete Feder derart vorgespannt, dass der Stößel des Einlassventils oder Auslassventils mit dem Hebelarm seines exzentrischen Kontaktpunkts auf dem Nocken ein Rückstellmoment erzeugt, welches für ein Loslassen des Bedienelements für ein Rückführen des Bedienelements mit Steuerkolben in eine Stellung NEUTRAL sorgt.

DE 26 23 235 A1 offenbart ein manuell betätigbares Schaltventil, welches zwischen ein Luftfederungsventil und einen Luftfederbalg zwischengeschaltet ist. Das Schaltventil besitzt drei Arbeitsstellungen, nämlich eine Stellung FAHRT, eine Stellung HEBEN und eine Stellung SENKEN. Zur Vorgabe der Arbeitsstellungen durch den Benutzer ist ein Hebel vorgesehen, welcher bei Verschwenkung auf einer Kreisbahn mit einem Schnappteil entlang einer Rastierkurve bewegt wird. Die Rastierkurve schlängelt sich ungefähr sinusförmig entlang einer Kreisbahn. Raststellungen des Hebels sind jeweils in Minima des sinusförmigen Verlaufs vorgesehen, wobei zwischen den Arbeitsstellungen FAHRT und HEBEN sowie SENKEN jeweils zwei Maxima vorgesehen sind sowie ein weiteres Minimum. Für ein Verschwenken des Hebels aus einer Stellung FAHRT um 30° in den Bereich eines benachbarten Minimums erfolgt eine Schließung sämtlicher Ventile, während eine Weiterbewegung um weitere 30°, also insgesamt 60° von der Stellung FAHRT in die Stellung HEBEN/SENKEN, ein Ventil zum Heben oder Senken geöffnet wird. Ist ein Fahrzeugrahmen um ein gewünschtes Maß angehoben oder abgesenkt, kann der Hebel manuell wieder in eine Stellung FAHRT bzw. STOP gebracht werden.

WO 91/06440 offenbart ein Luftfederungssystem, bei dem für den Fall, dass es ein Fahrer versäumt, nach Beendigung eines Hebe- oder Senkbetriebs eine Ventilgruppe in einen Zustand FAHRT zurückzuführen, mit erstmaliger Betätigung einer Betriebsbremse automatisiert ein Ventil in einem mit einem Zustand FAHRT korrespondierenden Zustand rückgeführt wird.

Die nicht vorveröffentlichte Druckschrift DE 10 2006 006439 B4 (WO 2007/093251 A1) offenbart eine Verriegelung eines Schaltventils in einer Stellung Senken. Die Verriegelung des Schaltventils in der Stellung Senken kann bei Anlegen eines elektrischen oder pneumatischen Signals automatisch aufgehoben werden, wodurch eine Rückstellung des Bedienelements in eine Stellung Fahrt ermöglicht werden soll. Dasindergenannten Druckschrift offenbarte Schaltventil ist lediglich für eine einkreisige Luftfederungsanlage geeignet.

Aus FR 2 733 942 ist ein manuell betätigbares pneumatisches Schaltventil bekannt, welches eine "normale" Stellung besitzt, die im Fahrzustand des Fahrzeugs genutzt wird und in der ein freier Ausschlag der Achsen ohne Beschädigung der verschiedenen Elemente der Struktur des Fahrzeugs erlaubt ist. Weiterhin sind Stellungen "Tief" und "Hoch" vorhanden, die bei einer Be- und Entladung im Bereich einer Laderampe genutzt werden. Ohne dass dies explizit in der Druckschrift angesprochen ist, scheinen die Stellungen "Tief" und "Hoch" stabile Stellungen darzustellen, die auch ohne manuelles Halten beibehalten werden. An dem Schwenkgriff, derfür die manuelle Herbeiführung der genannten Stellungen verantwortlich ist, greift ein einfach wirkender pneumatischer Zylinder an, der durch elektrische Ansteuerung eines Elektroventils ein- und ausgefahren werden kann. Erkennt eine Erfassungseinrichtung ein Ende eines Be- oder Entladevorgangs des Fahrzeugs, beispielsweise auf Grundlage eines ABS-Sensors oder eines Schließens der Türen, wird der Zylinder betätigt, womit eine Rückführung des Schwenkhebels aus der Stellung "Tief" oder "Hoch" in die Stellung "Normal" einhergeht.

Auch WO 92/12021 offenbart ein pneumatisches Schaltventil mit axial hintereinander liegenden Stellungen Senken, Stopp, Heben und Fahrt. Abweichend zu FR 2 733 942 erfolgt eine automatische Bewegung aus einer Stellung Heben oder Senken nicht durch einen extern von dem Schaltventil angeordneten pneumatischen Zylinder. Vielmehr besitzt das Schaltventil einen pneumatischen Steueranschluss, mit dessen Druckbeaufschlagung das Schaltventil in die Stellung Fahrt verbracht werden kann. Die Beaufschlagung des Steueranschlusses erfolgt beispielsweise auf Grundlage eines elektrischen Signales, welches erzeugt wird mit Bewegung der Fahrzeugräder oder mit dem Betrieb der Fahrzeugbremse.

Weiterer Stand der Technik ist aus DE 101 29 143 C1, DE 41 20 824 C1, EP-A-0 188 706 sowie WO 91/07291 A bekannt.

### AUFGABE DER ERFINDUNG

Aufgabe der vorliegenden Erfindung ist es, ein pneumatisches Schaltventil mit einer vergrößerten Betriebs- oder Transportsicherheit und/oder einem erhöhten Bedienkomfort bei unterschiedlichen Betriebsbedingungen vorzuschlagen.

### LÖSUNG

Die der Erfindung zugrunde liegende Aufgabe wird gelöst durch die Merkmale des unabhängigen Patentanspruchs 1. Weitere Ausgestaltungen der erfindungsgemäßen Lösung ergeben sich entsprechend den abhängigen Ansprüchen 2-13.

### BESCHREIBUNG DER ERFINDUNG

Der eingangs beschriebene Stand der Technik beruht auf dem Grundsatz, dass für manuell betätigbare pneumatische Schaltventile
- von einem Benutzer oder Fahrer eine Stellung HEBEN und/oder SENKEN manuell gehalten (DE 41 20 824 C1, DE 101 29 143 C1)) oder
- diese Stellungen manuell gelöst (DE 26 23 235 C3).
werden muss/müssen. Im Gegensatz hierzu beruht die vorliegende Erfindung auf der Erkenntnis, dass, zumindest in ausgewählten Betriebsbereichen, eine Verriegelung oder Rastierung des Steuerelements in der Stellung HEBEN und/oder SENKEN von Vorteil sein kann.

Mit einer derartigen Verriegelung oder Rastierung muss derBenutzerfürlängerandauernde Vorgänge HEBEN und SENKEN das Bedienelement nicht dauerhaft betätigen. Vielmehr verbleibt das Steuerelement infolge des Verriegelungselements oder Rastierelements automatisiert in der Stellung HEBEN oderSENKEN. Dies bedeutet, dass für die verriegelte Stellung HEBEN oder SENKEN der Fahrer noch während einer Änderung des Befüllungszustands eines Luftfederelements weitere Arbeiten verrichten kann.

Für ein gewünschtes Ende des Vorgangs HEBEN oder SENKEN kann der Benutzer das Rastierelement oder Verriegelungselement manuell lösen. Mit dem Lösen des Rastierelements oder Verriegelungselements erfolgt automatisiert eine Bewegung in die Stellung NEUTRAL, bspw. veranlasst durch eine Torsionsfeder oder exzentrische federbelastete Stößel gemäß dem eingangs genannten Stand derTechnik oder durch eine geeignete Druckbeaufschlagung. Alternativ kann die Verriegelungs- oder Rastiereinheit automatisiert gelöst werden.

Auch für eine Indikation einer Fahrsituation oder alternativ als "Default"-Lösung erfolgt eine automatische Verstellung in die Stellung NEUTRAL oder FAHRT. Diese Verstellung kann automatisiert aus einer Verriegelung für HEBEN oder SENKEN erfolgen und/ oder lediglich in einer automatisierten Überführung von einer Stellung NEUTRAL in die Stellung FAHRT bestehen. Beispielsweise ist in der Stellung NEUTRAL eine Verbindung zu einem Luftfederelement geschlossen oder sind Luftfederelemente zweier Luftfederkreise ku rzgeschlossen, während in der Stellung FAHRT das Luftfederelement mit einem Sperrventil oder einem Niveauregelventil verbunden sein kann.

Die Erfindung beruht insbesondere auf der Erkenntnis, dass es bei rauem Betrieb des Fahrzeugaufbaus, beispielsweise für auf einem Schiff oder auf der Bahn beförderten Fahrzeugaufbau, vorteilhaft ist, wenn das Luftfederelement entlüftet wird. Befindet sich das pneumatische Schaltventilfüreinen derartigen Transport nicht in einer Entlüftungsstellung, also nicht in einer Stellung SENKEN, sondern lediglich in einer Stellung NEUTRAL bzw. STOP, so kann es infolge der Bewegungen des Fahrzeugaufbaus und des Luftfederelements zu einer Veränderung der Druckverhältnisse in dem Luftfederelement kommen, beispielsweise zu einem Aufpumpen eines Luftfederbalgs oder einer Erzeugung eines Vakuums in dem Luftfederbalg, was zu mechanischen Beschädigungen des Luftfederbalgs führen kann. Auf Grundlage der erfindungsgemäßen Ausgestaltung kann fürderartige raue Einsatzbedingungen oder einen Transport mit dem Schiff oder der Bahn das Schaltventil in der Stellung SENKEN dauerhaft verriegelt werden, wodurch zuverlässig eine Entlüftung des Luftfederelements gewährleistet werden kann.

Andererseits kann es für ein gewünschtes Anheben im Bereich einer Rampe von Vorteil sein, wenn während eines Anhebens, und u. U. auch während eines anschließenden Be- und Entladevorgangs über die Rampe, das Steuerelement in der Stellung HEBEN verriegelt wird, so dass das Luftfederelement ständig mit Druckluft beaufschlagt ist.

Unter einer *Rastiereinheit* wird im Sinne der Erfindung insbesondere eine Einheit verstanden, welche formschlüssig eine Position des Steuerelements sichert und bei der der zuvor genannte Formschluss unter elastischer Verformung eines Rastierelements oder unter elastischem Nachgeben einer Abstützung eines Rastierelements gelöst werden kann. Für eine Auslegung einer minimalen Rastierkraft der Rastiereinheit sind insbesondere folgende Auslegungskriterien zu berücksichtigen:
- Für eine Rückstellung von der Stellung "SENKEN" in die Stellung "NEUTRAL" kann eine Torsionsfeder verantwortlich sein. Das Kraftniveau derTorsionsfeder in der Stellung "SENKEN" gibt eine Untergrenze für eine Kraft vor, der das Verriegelungselement oder das Rastierelement ausgesetzt wird.
- Eine weitere, u. U. eine Rückstellung aus der Stellung "SENKEN" bewirkende Kraft kann durch einen Stößel, beispielsweise des Einlassventils oder Auslassventils, erzeugt werden, die beabstandet zur Längsachse des Steuerelements auf das Steuerelement wirkt und somit ein Rückstellmoment erzeugt, welches von dem Rastierelement aufgenommen werden muss.
- Entsprechendes gilt für abweichende Rückstelleinrichtungen, insbesondere eine pneumatische Rückstellung.

Unter einer *Verriegelungseinheit* wird insbesondere eine Einheitverstanden, bei der die Position des Steuerelements über einen Formschluss mit einem Verriegelungselement gesichert wird und der Formschluss über eine Bewegung des Verriegelungselements gelöst wird. Damit wird eine Verrieglungseinheit vorzugsweise durch Betätigung des Verriegelungselements quer zum Steuerelement betätigt, während eine Rastiereinheit auch mit Aufbringung von Kräften in Längsrichtung des Steuerelements lösbar ist. Selbstverständlich sind auch abweichende Rastier- oder Verriegelungseinheiten möglich.

Entsprechend einer Weiterbildung der Erfindung kann eine besonders einfach zu realisierende Rastiereinheit oder Verriegelungseinheit bereitgestellt werden, wenn in dieser als Rastierelement oder Verriegelungselement eine federbeaufschlagte Rastkugel eingesetzt ist. Derartige Rastkugeln können kostengünstig als Halbzeug bezogen werden. Eine Rastkugel kann in eine geeigneten Nut oder Ausnehmung des Steuerelements, beispielsweise unter Ausbildung eines einer Bereitstellung einer geneigten Kontaktkontur für eine Kraftbeaufschlagung in Richtung eines Lösens der Rastiereinheit oder Verriegelungseinheit, eingreifen. Hierbei kann ein Lösen der Einheit über eine manuelle Betätigungskraft quer zu der Nut oder zur Ausnehmung erfolgen, die hinreichend groß ist, um die Kugel aus der Nut oder Vertiefung auswandern zu lassen. Andererseits ist es möglich, manuell auf die Abstützung der Rastkugel einzuwirken, so dass diese (leichter) aus der Ausnehmung oder Nut bewegt werden kann. Eine Rastkugel kann bspw. gemeinsam mit einem Federelement in eine radiale Bohrung des Gehäuses eingesetzt sein, so dass die Rastkugel besonders einfach in das Schaltventil integriert werden kann.

Um die Einwirkungsmöglichkeiten des Benutzers auf das Schaltventil zu erweitern, ist gemäß einem weiteren Vorschlag der Erfindung vorgesehen, dass die Rastiereinheit oder Verriegelungseinheit über ein weiteres Betätigungselement manuell betätigbar ist. Für die Ausbildung mit einer Verriegelungseinheit kann somit eine Bewegung des Steuerelements aus der Stellung SENKEN ausgeschlossen werden, wenn nicht von dem Benutzerdas weitere Betätigungselement, bspw. ein Betätigungsknopf oder -hebel, betätigtwird. Hierdurch kann die Betriebssicherheit des Schaltventils erhöht werden. Ebenfalls denkbar ist, dass in der Rastiereinheit für eine Aufbringung eines Schwellwerts eines Kraftniveaus das Steuerelement auch ohne Betätigung des weiteren Betätigungselements möglich ist, während mit Betätigung des Betätigungselements auch kleinere Betätigungskräfte oder die automatische Rückstellung eine Rückführung des Steuerelements in die Stellung NEUTRAL bewirken können. Weiterhin ist es möglich, dass zusätzlich zu einer Entriegelung durch Betätigung des weiteren Betätigungselements die Entriegelung automatisiert ausgelöst werden kann.

Eine weitere Ausgestaltung der Erfindung beruht auf der Beobachtung, dass u. U. ein Übergang in den Fahrbetrieb für den Fahrzeugaufbau möglich ist, obwohl sich das Steuerelement oder Bedienelement noch in der verriegelten Stellung SENKEN befindet.

Eine besonders einfache manuelle oder automatisierte Bewegung des Steuerelements kann erfindungsgemäß dadurch realisiert werden, dass das Steuerelement (Axial-)Stellungen VERRIEGELT, STOP und FAHRT besitzt. Die vorgenannten Stellungen sind in der vorgenannten Reihenfolge in eine Stellrichtung, beispielsweise in axiale Stellrichtung, hintereinanderliegend angeordnet. Dies hat zur Folge, dass mit einer Bewegung und einerKrafterzeugung, bspw. durch Druckluft oder einen elektrischen Aktuator, in eine Stellrichtung eine Bewegung von der Stellung VERRIEGELT über die Stellung STOP in die Stellung FAHRT erzeugt werden kann.

Für ein weiteres erfindungsgemäßes Schaltventil weist das Steuerelement eine Steuerfläche aufweist, die derart mit einem Druck beaufschlagbar ist, dass mit dieser Druckbeaufschlagung eine Bewegung des Steuerelements von der Stellung VERRIEGELT in die Stellung STOP sowie von der Stellung STOP in die Stellung FAHRT veranlasst werden kann. Durch die erfindungsgemäße Ausgestaltung kann die Zahl derfürdie automatisierte Rückstellung erforderlichen Federelemente, pneumatischen Leitungen und/oder Schaltelemente reduziert werden sowie die Zahl der erforderlichen Schaltventile. Weiterhin kann durch diese erfindungsgemäße Ausgestaltung die Betriebssicherheit erhöht werden.

Eine besonders kompakte Ausgestaltung des erfindungsgemäßen Schaltventils ergibt sich, wenn
- sowohl eine Druckbeaufschlagung zur Lösung des Verriegelungselements oder Rastierelements
- als auch eine Druckbeaufschlagung zur Verstellung des Steuerkolbens in Richtung der Stellung NEUTRAL und/oder FAHRT
von einem gemeinsamen Schaltventil veranlasst wird. Mit diesem gemeinsamen Schaltventil kann damit das Verriegelungselement automatisiert und selbsttätig gelöst werden. Gleichzeitig ist dafür Sorge getragen, dass sich das Verriegelungselement oder Rastierelement nach dem Lösen nicht ungewollt bewegt, sondern vielmehr wird durch eine gleichzeitige oder verzögerte Beaufschlagung des Steuerkolbens zwingend eine Bewegung desselben in Richtung der Stellung NEUTRAL und/ oder FAHRT veranlasst wird.

Das genannte Schaltventil kann pneumatisch betätigt sein. Alternativ ist ein derartiges gemeinsames Schaltventil an eine elektrische Intelligenz, beispielsweise eine elektrische Steuereinheit, angebunden und als Magnetventil ausgebildet. Nach Maßgabe der Steuereinrichtung kann das gemeinsame Schaltventil somit betriebsbedingt und in ausgewählter Beziehung zu weiteren Schaltelementen angesteuert werden.

Für eine weitere Ausgestaltung der Erfindung ist mit einer Indikation eines Starts einer aktuellen oder erwarteten Bewegung des Fahrzeugaufbaus und des zugeordneten Nutzfahrzeugs mit dem Steuerelement in der Stellung VERRIEGELT zunächst eine Druckbeaufschlagung vorgesehen, die die Verriegelungseinheit oder Rastiereinheit löst. In einem anschließenden Schritt wird das Steuerelement selbsttätig von der Stellung VERRIEGELT in die Stellung STOP oder NEUTRAL überführt. Hierbei handelt es sich beispielsweise um eine Verschwenkung des Steuerelements um eine Längsachse desselben. Eine Verstellung kann durch eine Torsionsfeder, einen Stößel eines Ventils oder eine geeignete Druckbeaufschlagung erfolgen. In einem anschließenden weiteren Schritt wird infolge einer Druckbeaufschlagung einer Steuerfläche des Steuerelements das Steuerelement automatisiert in die Stellung FAHRT verbracht, bspw. axial verschoben.

In weiterer Ausgestaltung der Erfindung ist das Steuerelement zwischen (Axial-)Stellungen VERRIEGELT, STOP und FAHRT axial verschieblich. Derartige axiale Verschiebungen können durch manuelle Betätigung und/oder eine geeignete Druckbeaufschlagung veranlasstwerden. Hingegen ist ein HEBEN oder SENKEN über ein rotatorisches Verschwenken des Steuer-elements in der Axialstellung STOP von einer Schwenkstellung NEUTRAL in eine Schwenkstellung HEBEN oder SENKEN möglich. Weiterhin ist der Freiheitsgrad einer Verschwenkung in der Schwenkstellung VERRIEGELT zumindest eingeschränkt gegenüber der Möglichkeit einer Verschwenkung in der Stellung STOP. Vorzugsweise ist eine Verschwenkung in der Stellung VERRIEGELT überhaupt nicht möglich. Durch diese Ausgestaltung können einerseits über den axialen Freiheitsgrad die unterschiedlichen Fahrzustände STOP und FAHRT realisiert werden, während eine Veränderung des Rotationsfreiheitsgrads über die jeweilige Axialstellung ermöglicht ist.

Für eine weitere Ausgestaltung der Erfindung ist das Steuerelement in der Stellung VERRIEGELT in einer Kulisse geführt. Unter Kulisse wird in diesem Zusammenhang bspw. ein radialer Fortsatz oder ein Zapfen des Steuerelements (oder Gehäuses) verstanden, welcher in Umfangsrichtung an einem Absatz des Gehäuses (oder Steuerelements) zur Anlage kommen kann, so dass zumindest ein einseitiger Anschlag in Umfangsrichtung gebildet ist. Alternativ können beidseitig wirkende Absätze von einer Nut gebildet sein, wobei das Übermaß der Nut gegenüber dem Zapfen die maximal mögliche Verschwenkung des Steuerelements vorgibt. Mit einer Kulisse kann besonders einfach der Rotationsfreiheitsgrad für die Stellung VERRIEGELT eingeschränkt werden und für einen Übergang zu der Stellung STOP der Absatz oder der Zapfen unwirksam werden oder eine wirksame Breite einer Nut vergrößert sein.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- Fig. 1: zeigt ein erfindungsgemäßes manuell betätigbares pneumatisches Schaltventil in schematischer Darstellung bei Integration in eine Anlage zum Heben und Senken eines Fahrzeugaufbaus mit Luftfederelementen.
- Fig. 2: zeigt unterschiedliche Freiheitsgrad eines Steuerelements eines erfindungsgemäßen Schaltventils in schematischer Darstellung.
- **Fig. 3**: zeigt eine konstruktive Ausgestaltung eines erfindungsgemäßen Schaltventils mit einer als Rastkugel ausgebildeten Rastiereinheit in einem Längsschnitt.
- **Fig.4**: zeigt eine alternative Ausgestaltung eines erfindungsgemäßen Schaltventils im Längsschnitt in einer Betriebsstellung FAHRT.
- **Fig.** 5: zeigt das Schaltventil gemäß Fig. 4 in einer Stellung STOP.
- **Fig. 6**: zeigt das Schaltventil gemäß Fig. 4 und 5 in einer Stellung VERRIEGELT.
- **Fig. 7**: zeigt das Schaltventil gemäß Fig. 4-6 in einem Querschnitt VII-VII in einer Axialstellung STOP gemäß Fig. 5 und einer Schwenkstellung NEUTRAL.
- **Fig. 8**: zeigt das Schaltventil gemäß Fig. 4-7 in einem Fig. 7 entsprechenden Querschnitt VIII-VIII, allerdings in einer Schwenkstellung SENKEN.
- **Fig. 9**: zeigt das Schaltventil gemäß Fig. 4-8 in einem Schnitt IX-IX in einer Schwenkstellung SENKEN und einer Axialstellung VERRIEGELT.
- **Fig.10**: zeigt eine alternative Ausgestaltung eines erfindungsgemäßen Schaltventils in einemTeil-Längsschnitt mit einem Verriegelungsstift.
- **Fig.11**: zeigt das Schaltventil gemäß Fig. 10 in einem Querschnitt XI-XI in einer verriegelten Stellung SENKEN.
- **Fig. 12**: zeigt eine weitere Ausgestaltungsform eines erfindungsgemäßen Schaltventils in einem Teil-Längsschnitt mit einer manuell betätigbaren Verriegelungseinheit.

### FIGURENBESCHREIBUNG

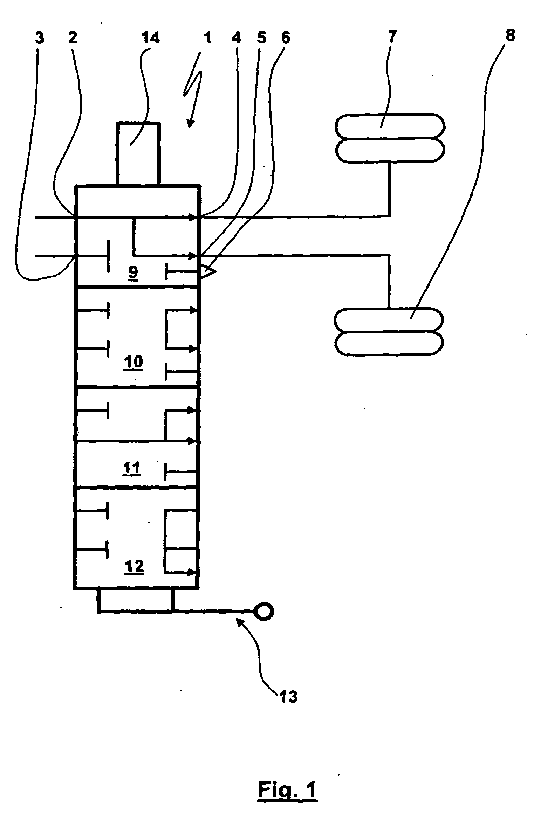

**Fig.1** zeigt ein Schaltventil 1, wie dieses für ein Fahrzeug, insbesondere ein Nutzfahrzeug, ein Zugfahrzeug oder einen Anhänger, zum Einsatz kommen kann. Das Schaltventil 1 ist an eine Luftfederanlage des Fahrzeugs integriert, beispielsweise entsprechend DE 101 29 143 C1.

Das Schaltventil besitzt Anschlüsse 2-6, die je nach Stellungen des Schaltventils 1 geeignet miteinander verbunden werden können. Beispielsweise ist Anschluss 2 mit einem Niveauregelventil verbunden, Anschluss 3 mit einer Druckluftversorgung, Anschlüsse 4 und 5 mit Luftfederelementen 7, 8 sowie Anschluss 6 mit einer Drucksenke oder Entlüftung.

Das Schaltventil 1 besitzt Stellungen FAHRT 9, STOP 10, HEBEN 11 und SENKEN 12. In der skizzierten Stellung FAHRT 9 ist der Anschluss 2 mit den Anschlüssen 4 und 5 verbunden, so dass bspw. in der Stellung FAHRT 9 das Niveauregelventil pneumatisch mit den Luftfederelementen 7,8 verbunden ist. In die Verbindung in dem Schaltventil können Drosseln entsprechend DE 101 29 143 C1 integriert sein. In der Stellung STOP 10 sind in dem Schaltventil 1 lediglich die Anschlüsse 4 und 5 miteinander verbunden, was zur Folge hat, dass über das Schaltventil 1 die Luftfederelemente 7,8 miteinander verbunden sind, ggf. ebenfalls unter Zwischenschaltung einer Drosselwirkung. In der Stellung HEBEN 11 ist der Anschluss 3 über das Schaltventil 1 mit den Anschlüssen 4,5 verbunden, so dass bspw. eine Druckluftversorgung, ggf. unter Zwischenschaltung einer Drosselwirkung, pneumatisch mit den Luftfederelementen 7, 8 verbunden ist und der Druck in den Luftfederelementen 7, 8 bei ausreichendem Druckgefälle zwischen Luftfederelementen 7, 8 und Druckluftversorgung angehoben werden kann, was mit einem Anheben des Fahrzeugaufbaus einhergeht. In der Stellung SENKEN 12 sind die Anschlüsse 4, 5 mit dem Anschluss 6 verbunden, was mit einer Entlüftung der Luftfederelemente 7, 8 korrespondiert.

Eine manuelle Betätigung des Schaltventils 1 ist über ein manuelles Bedienelement 13 möglich, wobei weiterhin ein Stellelement 14, insbesondere eine Feder, ein pneumatisches Element oder ein elektrischer Aktuator, ebenfalls permanent oder temporär nach Maßgabe einer Steuereinrichtung auf das Schaltventil 1 einwirken kann.

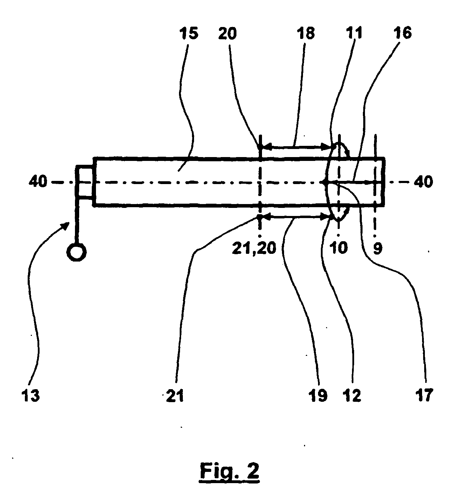

In **Fig. 2** ist schematisch ein Steuerelement 15 des Schaltventils 1 dargestellt, bei dem es sich um einen Steuerkolben handeln kann, der im Bereich seiner Mantelfläche mit in Fig. 2 nicht dargestellten Steuerflächen oder Steuerkanten mit pneumatischen Übertrittsquerschnitten oder Ventilen zusammenwirkt, wodurch die zuvor erläuterten Schaltzustände des Schaltventils 1 ermöglicht sind. Das Steuerelement 15 steht zur automatisierten und/oder manuellen Betätigung in Wirkverbindung sowohl mit dem Bedienelement 13 als auch mit dem Stellelement 14. Das Steuerelement 15 besitzt zwei Freiheitsgrade, nämlich einen Verschiebe-Freiheitsgrad in Richtung seiner Längsachse 40-40 sowie einen Verschwenk-Freiheitsgrad um die Längsachse 40-40. In der Axialstellung FAHRT 9 kann das Steuerelement 15 ebenfalls verschwenkbar sein, wobei allerdings vorzugsweise der Verschwenk-Freiheitsgrad in der Stellung FAHRT 9 behindert ist. Über eine Längsverschiebung 16 kann das Steuerelement 15 von der Stellung FAHRT 9 in die Stellung STOP 10 verbracht werden. In dieser Stellung STOP 10 besitzt das Steuerelement 15 den Verschwenk-Freiheitsgrad, in dem drei Verschwenkstellungen HEBEN 11, SENKEN 12 sowie eine Stellung NEUTRAL 17 zwischen den Stellungen HEBEN 11 und SENKEN 12 existieren.

Vorzugsweise ist mindestens ein Anschlag vorgesehen, der eine Verschwenkung des Steuerelements 15 über die Stellung HEBEN 11 und/oder SENKEN 12 hinaus vermeidet. In einer der Stellungen HEBEN 11 oder SENKEN 12 oder in beiden vorgenannten Stellungen kann das Steuerelement 15 über eine weitere Längsverschiebung 18, 19 in eine Stellung VERRIEGELT 20, 21 verschoben werden, in der zumindest ein Verschwenk-Freiheitsgrad des Steuerelements 15 zurück in Richtung NEUTRAL behindert ist. In alternativer, vereinfachter Ausgestaltung entfällt die Möglichkeit einer Längsverschiebung 18,19, und eine Verriegelung erfolgt in den Stellungen HEBEN 11 und/oder SENKEN 12. In Abwandlung zu der in Fig. 2 dargestellten schematischen Ausführungsform kann ein Wechsel von der Stellung FAHRT 9 zu Stellung STOP 10 sowie eine Verriegelungsbewegung über einen Verschwenk-Freiheitsgrad realisiert werden, während eine Realisierung der Stellungen HEBEN 11, SENKEN 12 und VERRIEGELT 20, 21 über einen Axial-Freiheitsgrad realisiert sein kann. Weiterhin ist es möglich, dass die Längsverschiebungen 18,19 nicht von der Längsverschiebung 16weg erfolgen, sondern vielmehr für eine Bewegung in Richtung der Stellungen VERRIEGELT 20,21 eine Bewegung erfolgt, die gegenläufig ist zur Bewegung von der Stellung FAHRT 9 zur Stellung STOP 10.

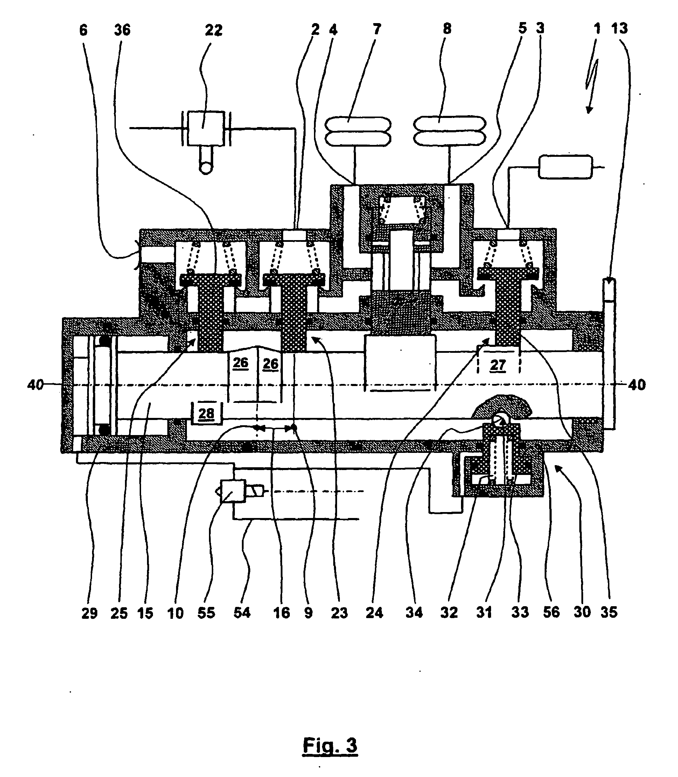

**Fig. 3** zeigt eine konstruktive Ausgestaltung eines Schaltventils 1 in einem Längsschnitt in einer Stellung HEBEN 11. Bei dem Schaltventil ist an den Anschluss 2 ein Niveauregelventil 22 angeschlossen. Den Anschlüssen 2, 3, 6 sind in der vorgenannten Reihenfolge Ventile 23, 24, 25 in Stößelbauart mit Federbeaufschlagung zugeordnet, die jeweils in Öffnungsstellung, in der die zugeordneten Federn verstärkt beaufschlagt sind, eine Verbindung des zugeordneten Anschlusses mit den Anschlüssen 4, 5 und damit den Luftfederelementen 7, 8 schaffen. Das Steuerelement 15 besitzt eine Steuerfläche 26, die in der (nicht dargestellten) Stellung FAHRT 9 das Ventil 23 öffnet, so dass die Luftfederelemente 7,8 mit dem Niveauregelventil 22 verbunden sind. Weiterhin besitzt das Steuerelement 15 Steuernocken 27, 28, die in der skizzierten Axialstellung STOP 10 zur Wirkung kommen können, wobei der Steuernocken 27 in der skizzierten Schwenkstellung HEBEN 11 das Ventil 24 öffnet, während der Steuernocken 28 in gegenüber Fig. 3 veränderter Schwenkstellung SENKEN 12 das Ventil 25 öffnet. In der dargestellten Stellung HEBEN 11 ist das Steuerelement 15 gegenüber einem Gehäuse 29 des Schaltventils 1 über eine Verriegelungseinheit 30 verriegelt Hierzu besitzt die Verriegelungseinheit 30 eine Verriegelungs- oder Rastkugel 31, die beaufschlagt durch eine Feder 32, die sich rückwärtig an dem Gehäuse 29 abstützt, und unter Zwischenschaltung eines Druckstücks 33 in eine Ausnehmung 34 des Steuerelements 15 gedrückt wird. Über die Gestaltung der Kontur der Ausnehmung 34 in dem dargestellten Längsschnitt können die Kräfte für ein Lösen der Verriegelungseinheit 30 oder Rastiereinheit mit einer manuellen oder pneumatischen oder elektrischen Beaufschlagung des Steuerelements 15 in Richtung der Längsachse 40-40 vorgegeben werden. Überdie Gestaltung der Ausnehmung 34 in Umfangsrichtung kann die Größe eines ggf. zugelassenen Schwenkwinkels für wirksame Verriegelungseinheit 30 vorgegeben werden. Vorzugsweise beträgt der zugelassene Schwenkwinkel jedoch ungefähr Null.

Fig. 3 zeigt weiterhin eine Druckleitung 54, die über ein gemeinsames elektrisches Schaltventil 55 zum einen mit einer Steuerfläche 42 des Steuerelements 15 verbindbar ist, über deren Beaufschlagung eine Bewegung von der Stellung STOP 10 zur Stellung FAHRT 9 veranlasst werden kann, und zum anderen eine Steuerfläche 56 eines Druckstücks 33 beaufschlagt werden kann, über die die Verriegelungseinheit 30 gelöst werden kann.

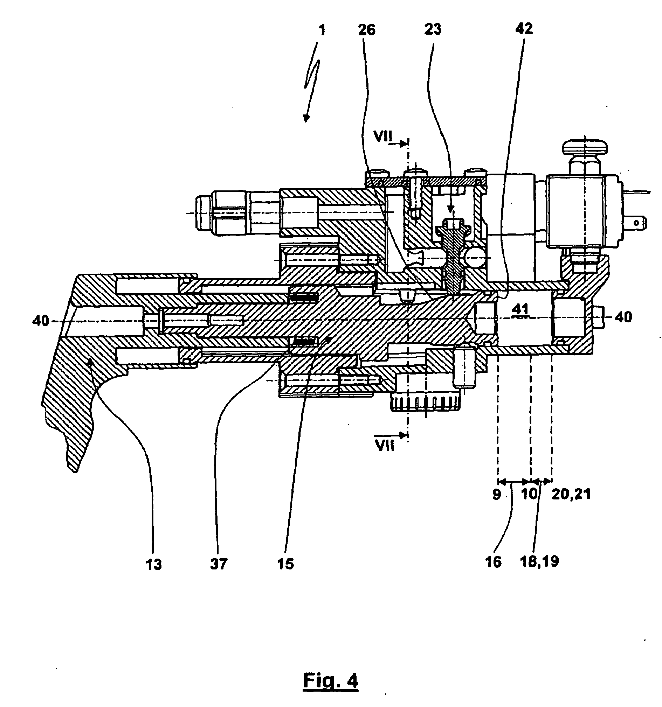

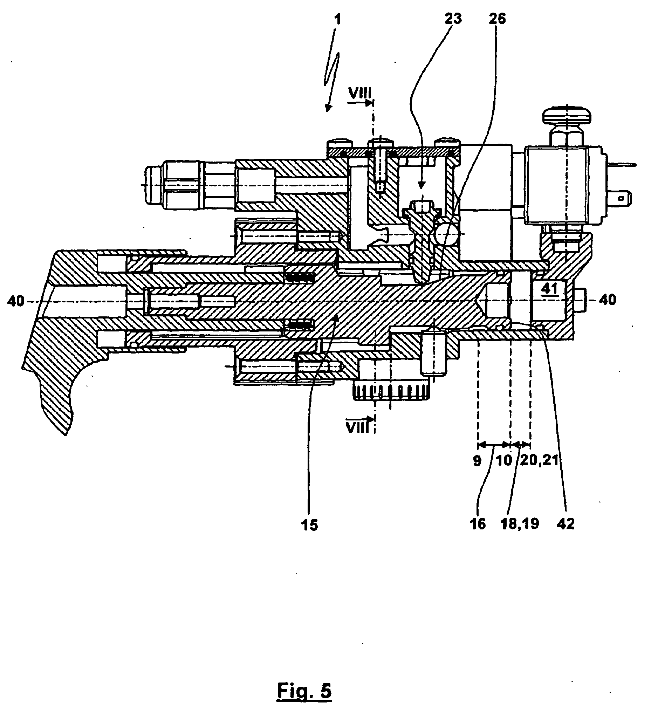

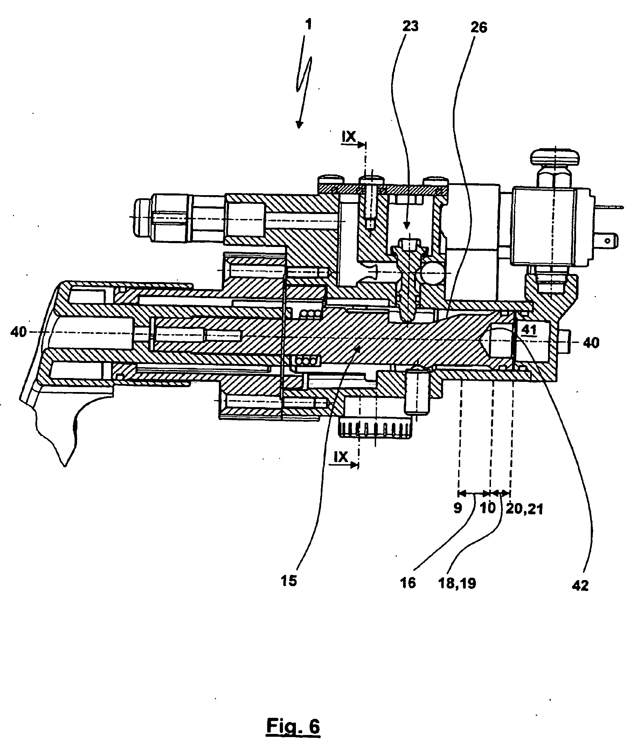

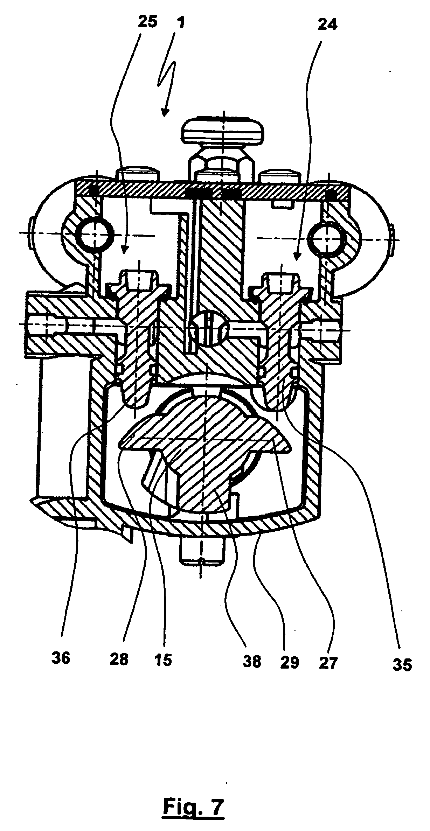

In den **Fig. 4-6** ist in einem Längsschnitt eine weitere Ausgestaltungsform eines erfindungsgemäßen Schaltventils 1 dargestellt, wobei in Fig. 4 das Schaltventil 1 in einer Stellung FAHRT 9, in Fig. 5 in einer Stellung STOP 10 sowie in Fig. 6 in einer Stellung VERRIEGELT 20 (21) dargestellt ist. In den Fig. 4-6 ist zu erkennen, dass das Öffnen und Schließen des Ventils 23 durch die Axialbewegung zwischen STOP 10 und FAHRT 9 des Steuerelements 15 mit der den Stößel des Ventils 23 kontaktierenden Steuerfläche 26 gesteuert wird. In dem Schnitt VII-VII gemäß **Fig. 7** ist ersichtlich, dass in der Stellung FAHRT gemäß Fig. 4 und 7 Stößel 35, 36 der Ventile 24,25 nicht in Wirkverbindung treten mit Steuernocken 27, 28 des Steuerelements 15.

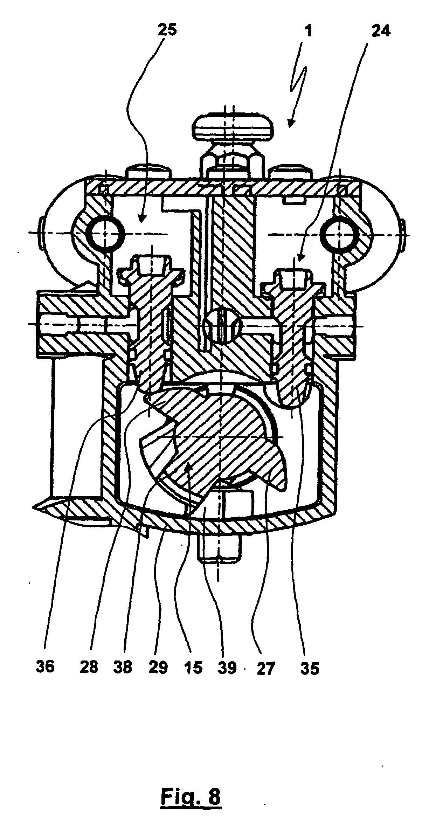

Hingegen kann in der Axialstellung STOP 10 gemäß Fig. 5 das Steuerelement 15 von einer Mittenstellung NEUTRAL 17 in die in **Fig. 8** dargestellte Stellung SENKEN verschwenkt werden, so dass der Steuernocken 28 den Stößel 36 des Ventils 25 betätigt, so dass das Ventil 25 öffnet. Wird über das Bedienelement 13 kein hinreichendes Moment auf das Steuerelement 15 aufgebracht, so kann das Steuerelement 15 aus der in Fig. 8 dargestellten Stellung SENKEN 12 infolge einer Torsionsfeder 37 zurück in die Stellung NEUTRAL 17 schwenken.

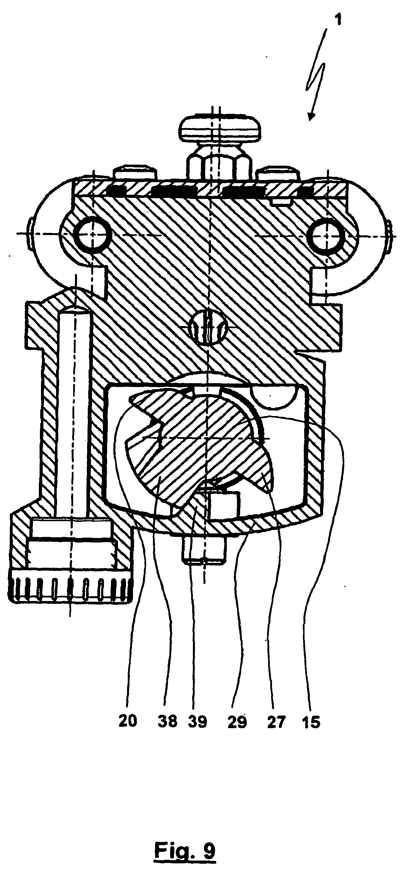

Allerdings kann gemäß **Fig. 6** **und** **9** das Steuerelement 15 über eine Längsverschiebung 19 aus der Stellung SENKEN 12 in die Stellung VERRIEGELT 21 überführt werden. In dieser Stellung liegt ein radial auswärts orientierter Zapfen 38 an einem Anschlag 39 des Gehäuses 29 an, so dass eine Rückverschwenkung des Steuerelements 15 vermieden ist. Für die Längsverschiebung 19 gleitet der Stößel 36 ohne maßgebliche Veränderung des Zustands des Ventils 25 in Richtung der Längsachse 40-40 entlang dem Steuernocken 28. Gleichzeitig bewegt sich der Zapfen 38 gleitend gegenüber dem Anschlag 39, wobei eine geeignete Einführschräge vorgesehen sein kann. Eine entsprechende Zapfen 38-Anschlag 39-Baugruppe kann zur Verriegelung ausgehend von der Stellung HEBEN 11 vorgesehen sein.

Zur automatisierten Entriegelung ist ein Druckraum 41 vorgesehen, über den eine stirnseitige Steuerfläche 42 des Steuerkolbens beaufschlagt werden kann und eine Verschiebung von der Stellung VERRIEGELT 21 (20) zur Stellung STOP 10 und ggf. nach einer Rückverstellung in die Stellung NEUTRAL 17 über die Torsionsfeder 37 eine weitere Verschiebung in Richtung der Stellung FAHRT 9 herbeigeführt werden kann.

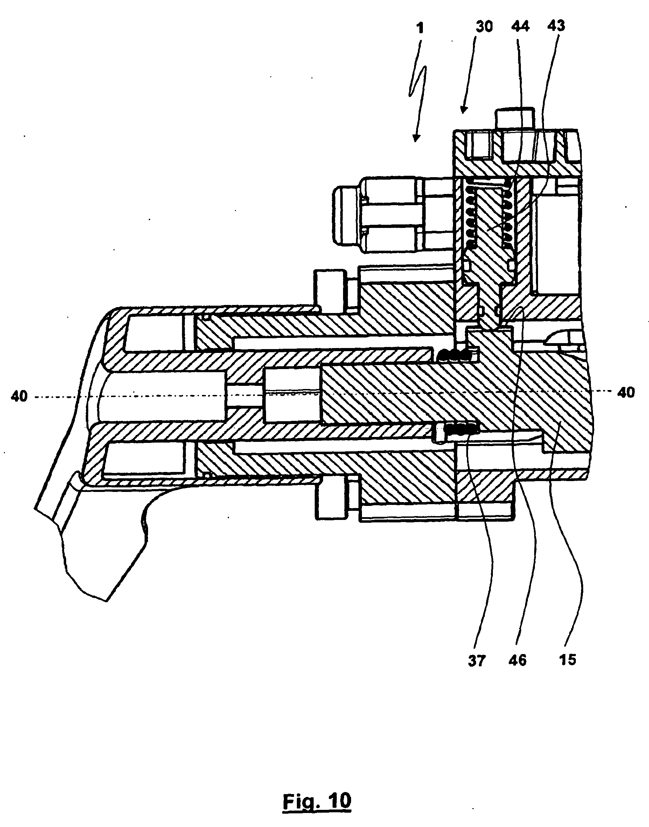

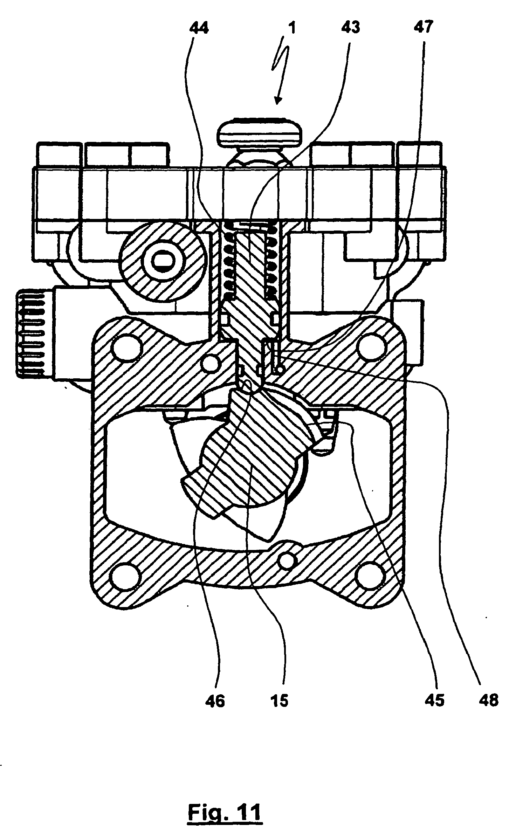

**Fig.10** zeigt eine alternative Ausgestaltung der Erfindung, bei dereine Verriegelung in einer Stellung HEBEN 11 oder SENKEN 12 über einen Verriegelungsstift 43 herbeigeführt werden kann. Hierbei ist es möglich, dass der Verriegelungsstift 43 entweder in einer Axialstellung STOP 10 zur Wirkung kommt, so dass eine weitere Längsverschiebung 18, 19 nicht möglich ist, oder aber erst nach einer weiteren Längsverschiebung 18,19 in einer Axialstellung VERRIEGELT 20, 21. Für eine Verriegelung in der Axialstellung STOP 10 gleitet der über eine Feder 44 in Richtung des Steuerelements 15 beaufschlagte Verriegelungsstift 43 entlang einer Mantelfläche 45, bis die abgerundete Stirnfläche des Verriegelungsstifts 43 Aufnahme findet in einer Ausnehmung oder Nut 46 des Steuerelements 15, s. **Fig. 11****.**

Der Verriegelungsstift 43 besitzt eine Steuerfläche 47, die über eine Leitung 48 mit einem Entriegelungsdruck beaufschlagbar ist, über den unter zunehmender Beaufschlagung der Feder 44 der Verriegelungsstift 43 von dem Steuerelement 15 weg bewegtwerden kann. In einer derartigen entriegelten Stellung kann über die Torsionsfeder 37 eine Rückstellung des Steuerelements 15 von einer Stellung HEBEN 11 oder SENKEN 12 in Richtung der Stellung NEUTRAL 17 erfolgen. Für den Fall, dass der Verriegelungsstift 43 in einer zusätzlichen Ebene VERRIEGELT 20, 21 wirksam wird, kann übereine Beaufschlagung des Druckraums 41 eine Längsverschiebung 18 erzeugt werden. Der Entriegelungsdruck in der Leitung 48 sowie der Druck in dem Druckraum 41 kann über ein gemeinsames Ventil freigegeben werden oder über separate Ventile, u. U. zeitversetzt.

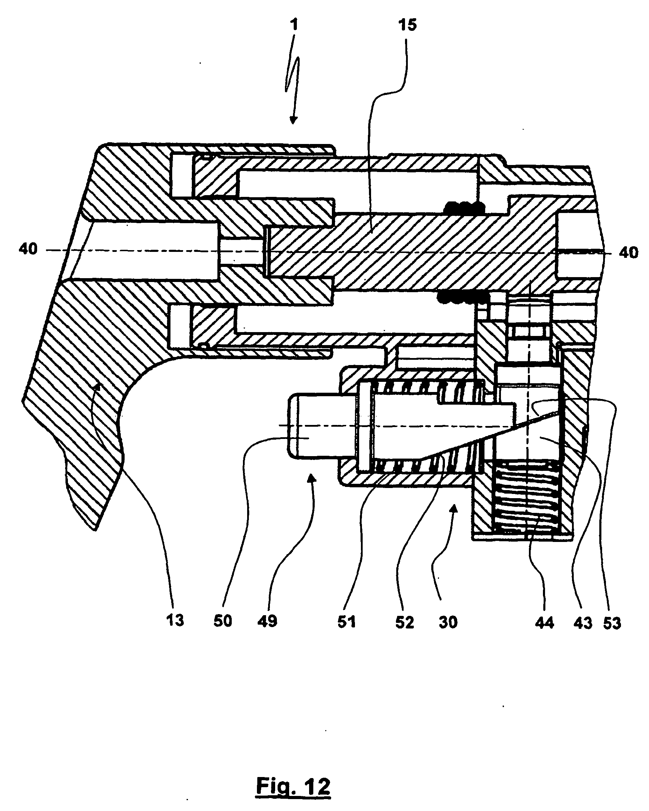

**Fig. 12** zeigt eine weitere Ausgestaltung eines Schaltventils 1 mit einer Verriegelungseinheit 30, die ebenfalls über einen Verriegelungsstift 43 verfügt, der über eine Feder 44 in Richtung des Steuerelements 15 beaufschlagt ist und in einer verriegelten Stellung HEBEN 11 oder SENKEN 12 formschlüssig in Umfangsrichtung des Steuerelements 15 mit dem Steuerelement 15 in Wirkverbindung tritt. Ein Lösen der Verriegelungseinheit 30 erfolgt in diesem Fall alternativ oder kumulativ zu einem Lösen über einen Entriegelungsdruck in einer Leitung 48 über ein weiteres Bedienelement 49. Das weitere Bedienelement 49 besitzt einen Betätigungsknopf 50, der über eine Feder 51 von dem Verriegelungsstift 43 weggedrückt wird. Fürden Fall, dass von einem Benutzer der Betätigungsknopf 50 in Richtung des Verriegelungsstifts 43 und unter zunehmender Beaufschlagung der Feder 51 betätigt wird, gleitet eine abgeschrägte Stirnfläche 52, die sowohl gegenüber der Betätigungsachse des Betätigungskopfs 50 als auch gegenüber der Längsachse des Verriegelungsstifts 43 einen spitzen Winkel bildet, entlang einer entsprechend abgeschrägten Anlagefläche 53 des Verriegelungsstifts 43, was mit einer Bewegung des Verriegelungsstifts 43 von dem Steuerelement 15 weg einhergeht, wodurch sich der Verriegelungsstift 43 in eine gelöste Stellung begibt. Somit ist eine Bewegung des Steuerelements 15 aus der Stellung HEBEN 11 oder SENKEN 12 möglich.

In entsprechender Ausgestaltung ist der Einsatz einer oder mehrerer Verriegelungs- oder Rastiereinheit(en) für ein Schaltventil für mehrere Luftfederkreise entsprechend dem eingangs genannten Stand der Technik möglich.

### BEZUGSZEICHENLISTE

- 1: Schaltventil
- 2: Anschluss
- 3: Anschluss
- 4: Anschluss
- 5: Anschluss
- 6: Anschluss
- 7: Luftfederelement
- 8: Luftfederelement
- 9: FAHRT
- 10: STOP
- 11: HEBEN
- 12: SENKEN
- 13: Bedienelement
- 14: Stellelement
- 15: Steuerelement
- 16: Längsverschiebung
- 17: NEUTRAL
- 18: Längsverschiebung
- 19: Längsverschiebung
- 20: VERRIEGELT
- 21: VERRIEGELT
- 22: Niveauregelventil
- 23: Ventil
- 24: Ventil
- 25: Ventil
- 26: Steuerfläche
- 27: Steuernocken
- 28: Steuernocken
- 29: Gehäuse
- 30: Verriegelungseinheit
- 31: Rastkugel
- 32: Feder
- 33: Druckstück
- 34: Ausnehmung
- 35: Stößel
- 36: Stößel
- 37: Torsionsfeder
- 38: Zapfen
- 39: Anschlag
- 40: Längsachse
- 41: Druckraum
- 42: Steuerfläche
- 43: Verriegelungsstift
- 44: Feder
- 45: Mantelfläche
- 46: Nut
- 47: Steuerfläche
- 48: Leitung
- 49: weiteres Bedienelement
- 50: Betätigungsknopf
- 51: Feder
- 52: Stirnfläche
- 53: Anlagefläche
- 54: Druckleitung
- 55: elektrisches Schaltventil
- 56: Steuerfläche

## Patentansprüche

1. Manuell betätigbares pneumatisches Schaltventil (1) für Anlagen zum Heben und Senken eines mindestens ein Luftfederelement (7; 8) aufweisenden Fahrzeugaufbaus mit einem Steuerelement (15) mit einem manuell betätigbaren Bedienelement (13), wobei das Steuerelement (15) Stellungen HEBEN (11), SENKEN (12), FAHRT (9) aufweist und nach Maßgabe der Stellung des Steuerelements (15) ein Einlassventil oder ein Auslassventil zum Heben und Senken betätigbar ist, wobei die Stellung HEBEN (11) und/oder SENKEN (12) des Steuerelements (15) über eine Verriegelungseinheit (30) oder eine Rastiereinheit sicherbar ist, **dadurch gekennzeichnet, dass**
a) ein automatisches Lösen der Verriegelungseinheit (30) oder Rastiereinheit in der Stellung HEBEN (11) oder SENKEN (12) mit Indikation einer Fahrsituation möglich ist,
ba) bei einem manuellen Lösen der Verriegelungseinheit (30) oder Rastiereinheit in der Stellung HEBEN (11) oder SENKEN (12) ein durch eine Torsionsfeder oder einen exzentrischen federbelasteten Stößel des Einlassventils oder Auslassventils federveranlasstes selbsttätiges Rückstellen des Steuerelements (15) aus der Stellung HEBEN (11) und/oder SENKEN (12) in eine Stellung NEUTRAL (17) und/oder in eine Stellung FAHRT (9) erfolgt oder
bb) bei einem automatischen Lösen der Verriegelungseinheit (30) oder Rastiereinheit in der Stellung HEBEN (11) oder SENKEN (12) mit Indikation einer Fahrsituation ein durch eine Torsionsfeder oder einen exzentrischen federbelasteten Stößel des Einlassventils oder Auslassventils federveranlasstes selbsttätiges Rückstellen des Steuerelements (15) aus der Stellung HEBEN (11) und/oder SENKEN (12) in eine Stellung NEUTRAL (17) und/oder in eine Stellung FAHRT (9) erfolgt, und
c) das Schaltventil zwei Anschlüsse (4, 5), die mit Luftfederelementen (7, 8) verbunden sind, besitzt.

2. Schaltventil (1) nach Anspruch 1, **dadurch gekennzeichnet, dass** die Rastiereinheit oder Verriegelungseinheit (30) mit einer von einer Feder (32) beaufschlagten Rastkugel (31) gebildet ist.

3. Schaltventil (1) nach Anspruch 1, **dadurch gekennzeichnet, dass** die Rastiereinheit oder Verriegelungseinheit (30) über ein weiteres Bedienelement (49) manuell betätigbar ist.

4. Schaltventil (1) nach einem dervorhergehenden Ansprüche, **dadurch gekennzeichnet, dass** das Steuerelement (15) Stellungen VERRIEGELT (20; 21), STOP (10) und FAHRT (9) besitzt, wobei die vorgenannten Stellungen in der vorgenannten Reihenfolge in eine Stellrichtung (Längsachse 40-40) hintereinander liegend angeordnet sind.

5. Schaltventil (1) nach Anspruch 4, **dadurch gekennzeichnet, dass** das Steuerelement (15) eine Steuerfläche (42) aufweist, die mit einem Druck derart beaufschlagbar ist, dass mit einer einzigen Druckbeaufschlagung eine Bewegung des Steuerelements (15) von der Stellung VERRIEGELT (20; 21) in die Stellung STOP (10) sowie von der Stellung STOP (10) in die Stellung FAHRT (9) veranlasstwerden kann.

6. Schaltventil (1) nach Anspruch 4 oder 5 **dadurch gekennzeichnet, dass** eine Druckbeaufschlagung zur Lösung eines Verriegelungselements (Verriegelungsstift 43) oder Rastierelements (Rastkugel 31) sowie eine Druckbeaufschlagung zur Verstellung des Steuerelements (15) in Richtung der Stellung FAHRT (9) und/oder STOP (10) von einem gemeinsamen Schaltventil (55) veranlasst wird.

7. Schaltventil (1) nach Anspruch 6, **dadurch gekennzeichnet, dass** das gemeinsame Schaltventil (55) als Magnetventil ausgebildet ist.

8. Schaltventil (1) nach Anspruch 6 oder Anspruch 7, **dadurch gekennzeichnet, dass** nach einem Start mit Steuerelement (15) in Stellung VERRIEGELT (20; 21)
a) das Schaltventil (1) eine Druckbeaufschlagung veranlasst, die die Verriegelungseinheit (30) oder Rastiereinheit löst,
b) das Steuerelement (15) von der Stellung VERRIEGELT (20; 21) in die Stellung STOP (10) überführt wird und
c) infolge der Druckbeaufschlagung einer Steuerfläche (42) des Steuerelements (15) das Steuerelement (15) von der Stellung STOP (10) in die Stellung FAHRT (9) verschoben wird.

9. Schaltventil (1) nach einem der Ansprüche 4 bis 8, **dadurch gekennzeichnet, dass** das Steuerelement (15) zwischen der Stellung VERRIEGELT (20; 21), STOP (10) und FAHRT (9) axial verschieblich ist und ein Heben und Senken über einen Rotationsfreiheitsgrad mit den Schwenkstellungen NEUTRAL (17), HEBEN (11) und SENKEN (12) in der Stellung STOP (10) erfolgt, wobei der Rotationsfreiheitsgrad in der Stellung VERRIEGELT (20; 21) gegenüber der Stellung STOP (10) zumindest eingeschränkt ist.

10. Schaltventil (1) nach Anspruch 9, **dadurch gekennzeichnet, dass** das Steuerelement (15) in der Stellung VERRIEGELT (20; 21) in einer Kulisse geführt ist.

11. Schaltventil (1) nach einem dervorhergehenden Ansprüche, **dadurch gekennzeichnet, dass** in der verriegelten Stellung HEBEN ein mit einer Druckluftversorgung verbundener Anschluss (3) mit den beiden Anschlüssen (4, 5) verbunden ist.

12. Schaltventil (1) nach einem der vorhergehenden Ansprüche, **dadurch gekennzeichnet, dass** in der verriegelten Stellung SENKEN ein mit einer Entlüftung verbundener Anschluss (6) mit den beiden Anschlüssen (4, 5) verbunden ist.

13. Schaltventil (1) nach einem dervorhergehenden Ansprüche, **dadurch gekennzeichnet, dass** in der Stellung STOP die beiden Anschlüsse (4, 5) miteinander verbunden sind, insbesondere unter Zwischenschaltung einer Drossel.

## Claims

1. Manually operable pneumatical switching valve (1) for systems for lifting and lowering a vehicle assembly comprising at least one air spring element (7; 8) having a control element (15) with a manually operable manipulation element (13), wherein the control element (15) comprises states LIFTING (11), LOWERING (12), DRIVE (9) and an inlet valve or an outlet valve for lifting and lowering is operable or operated in dependence on the position of the control element (15), the states LIFTING (11) and/or LOWERING (12) of the control element (15) being securable by means of a resting unit or a locking unit (30), **characterised by**
a) an automatic deactivation of the locking unit (30) or resting unit in the state LIFTING (11) or LOWERING (12) being allowed with the indication of a driving situation,
ba) upon a manual deactivation of the locking unit (30) or resting unit in the state LIFTING (11) or LOWERING (12) the control element (15) being returned from the state LIFTING (11) and/or LOWERING (12) into a state NEUTRAL (17) and/or into a state DRIVE (9) by a torsional spring or an eccentric stem or plunger of the inlet valve or of the outlet valve biased by a spring or
bb) upon automatic deactivation of the resting unit or locking unit (30) in the state LIFTING (11) or LOWERING (12) with the indication of a drive situation the control element (15) being returned from the state LIFTING (11) and/or LOWERING (12) into a state NEUTRAL (17) and/or into a state DRIVE (9) by a torsional spring or an eccentric stem or plunger of the inlet valve or of the outlet valve biased by a spring, and
c) the switching valve having two ports (4, 5) being connected with air spring elements (7, 8).

2. Switching valve (1) according to claim 1, wherein the resting unit or locking unit (30) is built with a resting sphere (31) biased by a spring (32).

3. Switching valve (1) according to claim 1, wherein the resting unit or locking unit (30) is manually operable by means of another manipulation element (49).

4. Switching valve (1) according to one of claims 1 to 3, wherein the control element (15) comprises states LOCKED (20; 21), STOP (10) and DRIVE (9), wherein the aforementioned states are located one behind the other in the aforementioned sequence in the manipulation direction (longitudinal axis 40-40).

5. Switching valve (1) according to claim 4, wherein the control element (15) comprises a control surface (42) wherein it is possible to pressurize the control surface such that with one single action of pressurizing the control surface a movement of the control element (15) is caused from the state LOCKED (20; 21) into the state STOP (10) as well as from the state STOP (10) to the state DRIVE (9).

6. Switching valve (1) according to claim 4 or 5, wherein the activation of pressure for releasing the locking element (locking pin 43) or resting element (locking sphere 31) as well as the activation of pressure for transferring the control element (15) versus the state DRIVE (9) and/or STOP (10) is caused by one an the same switching valve (55).

7. Switching valve (1) according to claim 6, wherein the switching valve (55) is a solenoid valve.

8. Switching valve (1) according to claim 6 or 7, wherein after the start with the control element (15) in the state LOCKED (20; 21)
a) the switching valve (1) causes an activation of pressure for releasing the locking unit (30) or resting unit,
b) the control element (15) is transferred from the state LOCKED (20; 21) into the state STOP (10) and
c) due to the activation of pressure at a control surface (42) of the control element (15) the control element (15) is transferred from the state STOP (10) into the state DRIVE (9).

9. Switching valve (1) according to one of claims 4 to 8, wherein the control element (15) is moveable in axial direction between the states LOCKED (20; 21), STOP (10) and DRIVE (9) and the lifting and lowering involves a pivoting degree of freedom with the pivoting states NEUTRAL (17), LIFTING (11) and LOWERING (12) in the state STOP (10), wherein the pivoting degree of freedom is at least limited in the state LOCKED (20; 21) when compared to the state STOP (10).

10. Switching valve (1) according to claim 9, wherein in the state LOCKED (20; 21) the control element (15) is guided by a motion link or slotted link.

11. Switching valve (1) according to one of claims 1 to 10, wherein in the locked state LIFTING a port (3) connected with the air supply is connected to the two ports (4, 5).

12. Switching valve (1) according to one of claims 1 to 11, wherein in the locked state LOWERING a port (6) connected with an exhaust is connected with the two ports (4, 5).

13. Switching valve (1) according to one of claims 1 to 12, wherein in the state STOP the two ports (4, 5) are connected with each other, in particular via a restriction valve or throttle valve.

## Revendications

1. Soupape de commutation pneumatique (1) à actionnement manuel pour des installations de levage et de descente d'une carrosserie de véhicule présentant au moins un organe de ressort pneumatique (7; 8), avec un élément de commande (15) ayant un élément de service (13) actionnable manuellement, où l'élément de commande (15) présente les positions LEVER (11), BAISSER (12), MARCHE (9) et selon la position de l'élément de commande (15), une soupape d'admission ou une soupape d'échappement pour lever ou baisser peut être actionnée, où la position LEVER (11) et/ ou BAISSER (12) de l'élément de commande (15) est assurée au moyen d'une unité de verrouillage (30) ou d'une unité d'encliquetage, **caractérisée en ce que**:
a) un déclenchement automatique de l'unité de verrouillage (30) ou de l'unité d'encliquetage dans la position LEVER (11) ou BAISSER (12) avec une indication d'une situation de déplacement est possible,
ba) lors d'un déclenchement manuel de l'unité de verrouillage (30) ou de l'unité d'encliquetage dans la position LEVER (11) ou BAISSER (12) un recul automatique de l'élément de commande (15) hors de la position LEVER (11) et/ou BAISSER (12) provoqué par un ressort de torsion ou par un poussoir excentrique précontraint par un ressort de la soupape d'admission ou de la soupape d'échappement se produit vers une position NEUTRE (17) et/ou une position MARCHE (9) ou
bb) lors d'un déclenchement automatique de l'unité de verrouillage (30) ou de l'unité d'encliquetage dans la position LEVER (11) ou BAISSER (12) avec indication d'une situation de déplacement, et
c) la soupape de commutation comporte deux connexions (4, 5) qui sont reliées à des éléments de ressort pneumatique (7, 8).

2. Soupape de commutation (1) selon la revendication 1, **caractérisée en ce que** l'unité d'encliquetage ou, unité de verrouillage (30) est formée par une bille d'encliquetage (31) soumise à un ressort (32).

3. Soupape de commutation (1) selon la revendication 1, **caractérisée en ce que** l'unité d'encliquetage ou, unité de verrouillage (30) peut être actionnée manuellement au moyen d'un autre élément de manipulation (48).

4. Soupape de commutation (1) selon l'une des revendications précédentes, **caractérisée en ce que** l'élément de commande (15) comporte les positions VEROUILLE (20, 21), STOP (10) et MARCHE (9), les positions précitées étant disposées, dans l'ordre précité, les unes derrière les autres selon une direction de positionnement (axe longitudinal 40-40).

5. Soupape de commutation (1) selon la revendication 4, **caractérisée en ce que** l'élément de commande (15) présente une surface de commande (42) qui peut être soumise à une pression de façon qu'avec une seule impulsion de pression, un mouvement de l'élément de commande (15) de la position VERROUILLE (20, 21) à la position STOP (10) et de la position STOP (10) à la position MARCHE (9) puisse être provoqué.

6. Soupape de commutation (1) selon la revendication 4 ou 5, **caractérisée en ce qu'**une application de pression pour relâcher un élément de verrouillage (tige de verrouillage 43) ou d'encliquetage (bille d'encliquetage 31) ainsi qu'une application de pression pour déplacer dans le sens de la position MARCHE (9) et/ou STOP (10) sont commandées par une soupape de commutation commune (55).

7. Soupape de commutation (1) selon la revendication 6 **caractérisée en ce que** la soupape de commutation commune (55) est formée par une soupape magnétique.

8. Soupape de commutation (1) selon la revendication 6 ou 7 **caractérisée en ce qu'**après un démarrage avec l'élément de commande (15) en position VERROUILLE (20, 21),
a) la soupape de commutation (1) applique une pression qui relâche unité de verrouillage (30) ou d'encliquetage,
b) déplace l'élément de commande (15) de la position VERROUILLE 520, 21) à la position STOP (10) et
c) par suite de l'application de pression à une surface de commande (42) de l'élément de commande (15), l'élément de commande (15) est déplacé de la position STOP (10) à la position MARCHE (9).

9. Soupape de commutation (1) selon l'une des revendications 4 à 8, **caractérisée en ce que** l'élément de commande (15) est déplaçable axialement entre les VERROUILLE (20, 21), STOP (10) et MARCHE (9) et qu'il s'ensuit un levage ou un abaissement sur un certain degré de liberté de rotation avec les positions de basculement NEUTRE (17), LEVER (11), et BAISSER (12) dans la position STOP (10), le degré de liberté de rotation dans la position VERROUILLE (20, 21) étant au moins réduit par rapport à la position STOP (10).

10. Soupape de commutation (1) selon la revendication 9, **caractérisée en ce que** l'élément de commande (15) est guidé par une coulisse dans la position VERROUILLE (20, 21).

11. Soupape de commutation (1) selon l'une des revendications précédentes, **caractérisée en ce que** dans la position LEVER, une connexion (3) reliée à une alimentation en air comprimé est raccordée aux deux connexions (4, 5).

12. Soupape de commutation (1) selon l'une des revendications précédentes, **caractérisée en ce que** dans la position BAISSER, une connexion (6) reliée à une purge est raccordée aux deux connexions (4, 5).

13. Soupape de commutation (1) selon l'une des revendications précédentes, **caractérisée en ce que** dans la position STOP, les deux connexions (4, 5) sont raccordées entre elles particulièrement avec interposition d'un étranglement.
